# DEMANDE DE BREVET EUROPEEN

(11) **EP 0 713 964 A1**
(43) Date de publication de la demande: **29.05.1996**
(21) Numéro de dépôt: 95402657.1
(22) Date de dépôt: 24.11.1995
(51) Int. Cl.: F02M 35/10, F02B 33/44, F02B 37/12

(54) **Dispositif d'admission pour moteur à combustion interne suralimenté**

(30) Priorité: 25.11.1994 FR 9414136
(71) Demandeur: Société Anonyme dite: REGIE NATIONALE DES USINES RENAULT, F-92109 Boulogne Billancourt (FR)
(72) Inventeur: Rivere, Jean-Pierre, F-75016 Paris (FR)
(74) Mandataire: Fernandez, Francis Lionel

(57) **Abrégé**

Dispositif d'admission (2) pour moteur à combustion interne suralimenté (1), du type comportant, de l'amont vers l'aval dans le sens de l'écoulement de l'air comburant, un passage d'admission commun (4) muni notamment d'un filtre à air (3) et d'un compresseur (11), un boîtier de répartition (6) et une pluralité de tubulures d'admission individuelles (7,8) pour alimenter les conduits d'admission formés dans la culasse dudit moteur (1), caractérisé en ce que qu'il comporte un second passage d'admission commun (17) reliant le filtre à air (3) au boîtier de répartition (6) parallèlement audit premier passage (4), ledit second passage (17) coopérant avec des moyens obturateurs (18) pilotés suivant les conditions de fonctionnement du moteur (1) de façon à permettre la circulation de l'air comburant lors de la phase d'amorçage dudit compresseur (11).

## Description

La présente invention se rapporte à un dispositif d'admission pour un moteur à combustion interne suralimenté, destiné notamment à équiper un véhicule automobile. La présente invention concerne plus particulièrement un dispositif d'admission variable pour un moteur à combustion interne suralimenté.

Le document US-4.628.880 décrit un système d'admission variable destiné à équiper un moteur à combustion interne suralimenté. Ce système comporte un passage commun muni notamment d'un filtre à air et d'un compresseur d'air, ce passage débouchant ensuite dans un collecteur d'admission du type présentant un boîtier répartiteur relié à chacun des cylindres du moteur par deux tubulures d'admission distinctes, une tubulure pour les bas régimes et une tubulure pour les hauts régimes, la tubulure "hauts régimes" coopérant avec un volet papillon piloté permettant d'obturer sélectivement la circulation de l'air ou du mélange carburé suivant la valeur du régime de rotation moteur.

Un tel système d'admission variable pour moteur suralimenté permet bien d'améliorer le remplissage du moteur dans de larges conditions de fonctionnement du moteur et notamment lors des phases de fonctionnement à bas régimes comme par exemple au ralenti. Il présente toutefois l'inconvénient notamment s'il est équipé d'un turbo-compresseur utilisant l'énergie des gaz d'échappement, de perdre quelque peu de son efficacité pendant toute la phase d'amorçage du compresseur, la roue du compresseur qui s'étend à travers le passage d'admission constituant alors une importante perte de charge limitant le remplissage en air du moteur et ce, malgré l'utilisation de tubulures d'admission spécifiquement "bas régimes".

La présente invention a donc pour but de réaliser un dispositif d'admission pour moteur à combustion interne suralimenté apte à supprimer efficacement l'impact sur le remplissage du moteur du compresseur tant que ce dernier n'est pas amorcé.

Le dispositif d'admission pour moteur à combustion interne suralimenté selon l'invention est du type comportant, de l'amont vers l'aval dans le sens de l'écoulement de l'air comburant, un passage d'admission commun muni notamment d'un filtre à air et d'un compresseur, un boîtier de répartition et une pluralité de tubulures d'admission individuelles pour alimenter les conduits d'admission correspondants formés dans la culasse du moteur.

Selon l'invention, le dispositif d'admission pour moteur à combustion interne suralimenté objet de l'invention est caractérisé en ce que qu'il comporte un second passage d'admission commun reliant le filtre à air au boîtier de répartition parallèlement au premier passage d'admission commun, ce second passage d'admission commun coopérant avec des moyens obturateurs pilotés suivant les conditions de fonctionnement du moteur de façon notamment à y faire circuler l'air comburant tant que le compresseur n'est pas amorcé.

Ainsi, grâce à l'utilisation d'un second passage d'admission commun ouvert pendant l'amorçage du compresseur, il est possible de supprimer l'effet de la perte de charge de ce dernier sur le remplissage du moteur.

Selon une autre caractéristique du dispositif d'admission pour moteur à combustion interne suralimenté objet de l'invention, les moyens obturateurs coopérant avec le second passage d'admission commun sont pilotés par un système électronique de contrôle moteur à partir de la valeur du régime de rotation moteur fournie par des moyens de mesure appropriés.

Selon une autre caractéristique du dispositif d'admission pour moteur à combustion interne suralimenté objet de l'invention, les moyens obturateurs coopérant avec le second passage d'admission commun sont pilotés suivant la valeur de la surpression obtenue en sortie du compresseur.

Selon une autre caractéristique du dispositif d'admission pour moteur à combustion interne suralimenté objet de l'invention, le boîtier de répartition communique avec chacune des chambres de combustion du moteur par deux conduits tubulures d'admission individuelles de caractéristiques acoustiques distinctes, une première tubulure individuelle de section réduite adaptée aux bas régimes et une seconde tubulure d'admission individuelle de section plus importante adaptée aux hauts régimes, la seconde tubulure individuelle "hauts régimes" coopérant avec des moyens obturateurs pilotés suivant les conditions de fonctionnement du moteur.

Ainsi, grâce à l'utilisation d'un second passage d'admission commun ouvert pendant l'amorçage du compresseur et de tubulures d'admission adaptées aux conditions correspondantes de fonctionnement du moteur, il est possible de supprimer l'effet de la perte de charge de ce dernier sur le remplissage du moteur et de bénéficier à plein du bénéfice de l'utilisation de tubulures d'admission adaptées pour maximiser le remplissage du moteur.

Selon une autre caractéristique du dispositif d'admission pour moteur à combustion interne suralimenté objet de l'invention, les moyens obturateurs coopérant avec la seconde tubulure d'admission individuelle sont pilotés suivant la valeur de la surpression obtenue en sortie du compresseur.

Selon une autre caractéristique du dispositif d'admission pour moteur à combustion interne suralimenté objet de l'invention, les moyens obturateurs coopérant avec la seconde tubulure d'admission individuelle, sont pilotés par un système électronique de contrôle moteur à partir de la valeur du régime de rotation moteur fournie par des moyens de mesure appropriés.

Selon une autre caractéristique du dispositif d'admission pour moteur à combustion interne suralimenté objet de l'invention, le compresseur coopère avec des moyens de régulation de la surpression comportant un passage de by-pass muni d'une vanne de décharge.

Selon une autre caractéristique du dispositif d'admission pour moteur à combustion interne suralimenté objet de l'invention, le second passage d'admission commun constitue également le passage de by-pass du compresseur.

on comprendra mieux les buts, aspects et avantages de la présente invention, d'après la description exposée ci-après d'un mode de réalisation de l'invention, donné à titre d'exemple non limitatif, en se référant au dessin annexé, dans lequel :

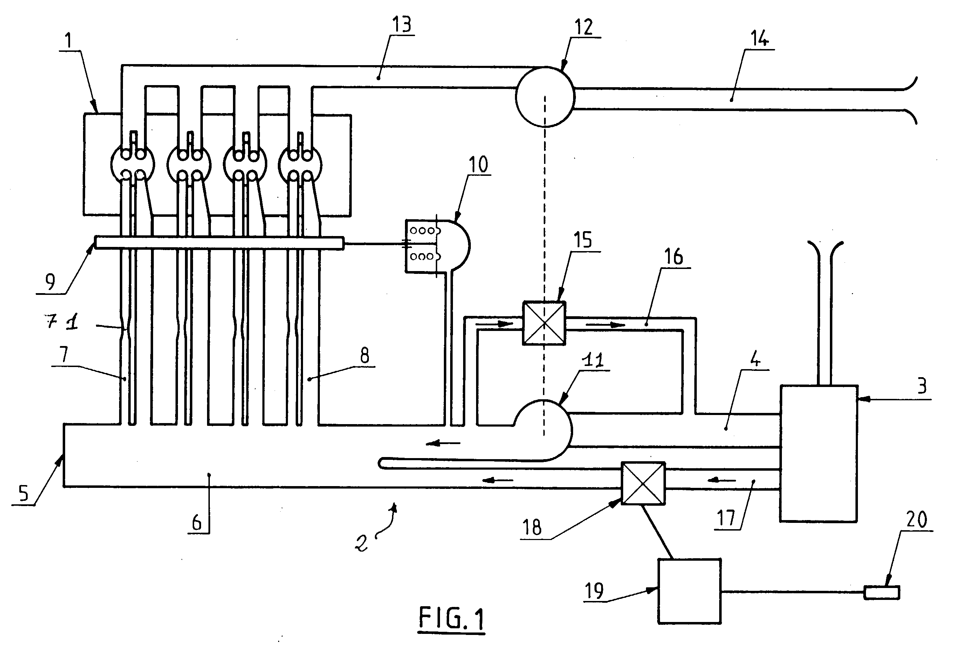

la figure 1 représente une vue schématique d'un moteur à combustion interne à turbo-compresseur équipé d'un dispositif d'admission selon l'invention.

Seuls les éléments nécessaires à la compréhension de l'invention ont été figurés.

Le moteur 1 représenté à la figure 1 est un moteur à combustion interne à quatre cylindres en ligne du type à quatre temps, multi-soupapes, à allumage par compression et à turbo-compresseur. Ce moteur 1 est équipé d'un dispositif d'admission variable 2 comportant un passage d'admission principal commun 4 muni notamment du filtre à air 3 et d'un compresseur 11.

Ce passage commun d'admission 4 communique dans un collecteur d'admission 5 présentant un boîtier de répartition 6 ainsi qu'une pluralité de tubulures d'admission individuelles 7,8 destinées à être connectés aux ouvertures d'entrée des conduits d'admission correspondants, encore appelées pipes d'admission, ménagés à travers la culasse du moteur. Ces pipes d'admission débouchent dans les chambres de combustion du moteur 1, agencées sur la face inférieure de la culasse, par des orifices que viennent obturer des soupapes à tige actionnées par des cames de commande non figurées.

La roue du compresseur à air 11 qui s'étend à travers le conduit commun d'admission 4, est accouplée par un arbre commun, schématisé en pointillé sur la figure, à la roue d'une turbine à gaz 12. Cette turbine 12 qui est disposée sur le circuit d'échappement du moteur 1, entre le collecteur d'échappement 13 et le départ de la ligne d'échappement 14, récupère une partie de l'énergie des gaz brûlés qui est mise à profit pour entraîner le compresseur d'air 11.

La régulation du turbo-compresseur pour limiter la surpression de l'air admis en fonction des besoins du moteur 1 est classiquement opérée au moyen d'une Wastegate pilotant un passage de dérivation de la turbine 12 ou bien encore comme cela est représenté sur la figure 1 par des moyens obturateurs 15, telle qu'une soupape de décharge actionnable par un actuateur pneumatique, contrôlant un passage de by-pass 16 reliant la sortie du compresseur 11 à l'entrée de ce dernier.

Le collecteur d'admission 5 utilisé est du type à acoustique variable, chacune des chambres de combustion du moteur étant sélectivement alimentée à partir de deux tubulures individuelles d'admission de caractéristiques acoustiques distinctes, une tubulure 7 de section réduite adaptée notamment à des fonctionnements bas régimes du moteur et une tubulure 8 de section plus importante adaptée aux fonctionnements hauts régimes. Les tubulures "hauts régimes" 8 coopèrent avec des moyens obturateurs 9 pilotés en fonction des conditions de fonctionnement du moteur et notamment de la valeur de la surpression en sortie de compresseur 11.

Ces moyens obturateurs contrôlant le passage de l'air à travers les tubulures "hauts régimes" peuvent être par exemple constitués par des volets de type papillon 9 actionnés par une tringlerie reliée de façon articulée à la tige d'un actionneur pneumatique ou à membrane 10. L'actionneur pneumatique 10 est intérieurement munie d'une membrane solidaire de la tige, cette membrane étant constamment sollicitée par les poussées antagonistes d'un ressort taré et de la pression atmosphérique d'une part et de la pression régnant en sortie du compresseur 11 d'autre part.

Le dispositif d'admission 2 selon l'invention comporte par ailleurs un second passage commun 17 de caractéristiques acoustiques adaptées, s'étendant parallèlement au passage 4 et mettant en communication le filtre à air et le boîtier de répartition du collecteur d'admission 2. Ce second passage sert plus particulièrement à amener l'air comburant au moteur tant que le compresseur 11 n'est pas amorcé, c'est-à-dire tant que le compresseur génère des pertes de charges ne permettant pas un remplissage optimal du moteur par le passage 4.

Le second passage commun d'admission 17 est muni donc de moyens obturateurs 18 pilotés en fonction des conditions de fonctionnement moteur et notamment du régime de rotation moteur, ces moyens obturateurs étant plus particulièrement destinés à maintenir ouvert le passage 17 tant que le compresseur n'est pas amorcé.

Ces moyens obturateurs contrôlant l'ouverture du passage 17 peuvent être par exemple constitués par un volet de type papillon motorisé 18 piloté par un système de contrôle électronique 19 à partir de l'information régime de rotation moteur délivré par un capteur de position angulaire 20 coopérant avec une cible dentée portée par le vilebrequin moteur.

Conformément à la description qui précède, le fonctionnement du dispositif d'admission selon l'invention est le suivant.

A bas régimes, le compresseur 11 ne fournit pas de surpression suffisante pour compenser les pertes de charges qu'il génère dans le passage commun 4. on commande alors les moyens obturateurs 9 et 18 pour respectivement fermer les secondes tubulures 8 et pour ouvrir le second passage commun 17. Le remplissage du moteur est alors optimal, le circuit d'admission étant alors parfaitement adapté aux conditions de fonctionnement du moteur et ne présentant alors que très peu de pertes de charge. Ce remplissage peut encore être amélioré en munissant chacune des tubulures "bas régimes" 7 d'une restriction en forme de tuyère 71.

Lorsque le régime de fonctionnement devient suffisant pour permettre une valeur de surpression satisfaisante en sortie de compresseur 11, on commande alors les moyens obturateurs 9 et 18 pour respectivement ouvrir les secondes tubulures 8 et pour fermer le second passage commun 17. Le remplissage du moteur qui est alors entièrement assuré par l'air comburant issu du compresseur 11 est alors optimisé par l'utilisation de plusieurs tubulures d'admission 7,8 par chambre de combustion et notamment par l'utilisation de tubulures "hauts régimes" offrant une grande perméabilité.

Ainsi, le dispositif d'admission selon l'invention permet de bénéficier tout à la fois des avantages d'une admission atmosphérique, d'une admission suralimentée ainsi que d'une admission multi-soupapes.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit et si celles-ci s'inscrivent dans le cadre des revendications.

Ainsi, la présente invention est applicable aussi bien sur un moteur à allumage par compression que pour un moteur à allumage commandé.

Ainsi, les moyens obturateurs contrôlant le passage de l'air à travers les tubulures "hauts régimes" 8 peuvent être pilotés non pas directement à partir de la valeur de la surpression en sortie du compresseur 11 mais directement à partir du régime de rotation moteur par exemple grâce à un actuateur électro-mécanique relié au système de contrôle moteur 19, l'ouverture des volets 9 étant alors opérée sitôt que le régime moteur dépasse une valeur de seuil donnée (pouvant varier suivant d'autres conditions de fonctionnement moteur : charge, température, etc.).

Ainsi, les moyens obturateurs contrôlant le passage de l'air à travers les tubulures "hauts régimes" peuvent être par exemple constitués par des volets de type papillon 9 actionnés par une tringlerie reliée de façon articulée à la tige d'un actionneur pneumatique ou à membrane 10. L'actionneur pneumatique 10 est intérieurement muni d'une membrane solidaire de la tige, cette membrane étant constamment sollicitée par les poussées antagonistes d'un ressort taré et de la pression atmosphérique d'une part et de la pression régnant en sortie du compresseur 11 d'autre part.

Ainsi, les moyens obturateurs 9 contrôlant les tubulures d'admission "hauts régimes" 8 et les moyens obturateurs 18 contrôlant le second passage commun 17, peuvent être pilotés exactement selon les mêmes critères de fonctionnement moteur.

Ainsi, également le passage de by-pass 16 destiné à la limitation de la pression de suralimentation peut être constitué par le second passage commun 17, les moyens obturateurs associés 18 étant alors pilotés pour ouvrir le passage à la fois lorsque la surpression (et/ou le régime) est inférieure à une première valeur de seuil et lorsque la surpression (et/ou le régime) est supérieure à une seconde valeur de seuil.

## Revendications

1. Dispositif d'admission (2) pour moteur à combustion interne suralimenté (1), du type comportant, de l'amont vers l'aval dans le sens de l'écoulement de l'air comburant, un passage d'admission commun (4) muni notamment d'un filtre à air (3) et d'un compresseur (11), un boîtier de répartition (6) et une pluralité de tubulures d'admission individuelles (7,8) pour alimenter les conduits d'admission formés dans la culasse dudit moteur (1), caractérisé en ce que qu'il comporte un second passage d'admission commun (17) reliant le filtre à air (3) au boîtier de répartition (6) parallèlement audit premier passage (4), ledit second passage (17) coopérant avec des moyens obturateurs (18) pilotés suivant les conditions de fonctionnement du moteur (1) de façon à permettre la circulation de l'air comburant dans le second passage lors de la phase d'amorçage dudit compresseur (11) et ainsi de supprimer l'impact sur le remplissage du moteur de la perte de charge générée par la présence dudit compresseur (11) à travers le premier passage d'admission (4).

2. Dispositif d'admission (2) pour moteur à combustion interne suralimenté (1) selon la revendication 1, caractérisé en ce que lesdits moyens obturateurs (18) sont pilotés par un système électronique de contrôle moteur (19) à partir de la valeur du régime de rotation moteur fournie par des moyens de mesure appropriés (20).

3. Dispositif d'admission (2) pour moteur à combustion interne suralimenté (1) selon l'une quelconque des revendications 1 à 2, caractérisé en ce que lesdits moyens obturateurs (18) sont pilotés suivant la valeur de la surpression obtenue en sortie du compresseur (11).

4. Dispositif d'admission (2) pour moteur à combustion interne suralimenté (1) selon l'une quelconque des revendications 1 à 3, caractérisé en ce que ledit boîtier de répartition (6) communique avec chacune des chambres de combustion du moteur (1) par deux tubulures d'admission individuelles de caractéristiques acoustiques distinctes, une première tubulure d'admission individuelle (7) de section réduite et une seconde tubulure d'admission individuelle (8) de section plus importante, ladite seconde tubulure (8) coopérant avec des moyens obturateurs (9) pilotés suivant les conditions de fonctionnement du moteur (1).

5. Dispositif d'admission (2) pour moteur à combustion interne suralimenté (1) selon la revendication 4, caractérisé en ce que lesdits moyens obturateurs (9) coopérant avec ladite seconde tubulure d'admission individuelle (8) sont pilotés suivant la valeur de la surpression obtenue en sortie du compresseur (11).

6. Dispositif d'admission (2) pour moteur à combustion interne suralimenté (1) selon l'une quelconque des revendications 4 à 5, caractérisé en ce que lesdits moyens obturateurs (9) coopérant avec ladite seconde tubulure d'admission individuelle (8) sont pilotés par un système électronique de contrôle moteur (19) à partir de la valeur du régime de rotation moteur fournie par des moyens de mesure appropriés (20).

7. Dispositif d'admission (2) pour moteur à combustion interne suralimenté (1) selon l'une quelconque des revendications 4 à 6, caractérisé en ce que lesdites premières tubulures d'admission individuelles (7) sont munies d'une restriction de type tuyère (71).

8. Dispositif d'admission (2) pour moteur à combustion interne suralimenté (1) selon l'une quelconque des revendications 1 à 7, caractérisé en ce que ledit compresseur (11) coopère avec des moyens de régulation de la surpression comportant un passage de by-pass (16) du compresseur (11) muni d'une vanne de décharge (15).

9. Dispositif d'admission (2) pour moteur à combustion interne suralimenté (1) selon la revendication 8, caractérisé en ce que ledit second passage d'admission commun (17) forme également le passage de by-pass (16) du compresseur (11).
